# FASCICULE DE BREVET EUROPEEN

(11) **EP 3 824 676 B1**
(45) Date de publication et mention de la délivrance du brevet: **25.03.2026**
(21) Numéro de dépôt: 19748877.8
(22) Date de dépôt: 10.07.2019
(51) Int. Cl.: H04W 48/18, H04W 12/06, H04W 12/088, H04W 76/11

(54) **DISPOSITIFS ET PROCEDES DE GESTION D'UN ATTACHEMENT D'UN DISPOSITIF DE COMMUNICATION A UN RESEAU D'UN OPERATEUR**
GERÄTE UND VERFAHREN ZUR VERBINDUNGSVERWALTUNG EINES ENDGERÄTS IN EINEM KOMMUNIKATIONSNETZWERK
APPARATUSES AND METHODS FOR MANAGING THE CONNECTION OF A MOBILE COMMUNICATION DEVICE TO A COMMUNICATION NETWORK

(30) Priorité: 19.07.2018 FR 1856721
(43) Date de publication de la demande: 26.05.2021
(73) Titulaire: Orange, 92130 Issy-les-Moulineaux (FR)
(72) Inventeur: BERTIN, Emmanuel, 92326 Châtillon Cedex (FR); TUFFIN, Stéphane, 92326 Châtillon Cedex (FR)
(86) Numéro de dépôt international: PCT/FR2019/051736
(87) Numéro de publication internationale: WO 2020/016504

(56) Documents cités:
- "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1 - 527, XP051295448
- "3rd Generation Partnership Project; Technical Specification Group Services and System Aspects; Study on the security aspects of the next generation system (Release 14)", 3GPP STANDARD; TECHNICAL REPORT; 3GPP TR 33.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V1.3.0, 21 August 2017 (2017-08-21), pages 1 - 605, XP051450230
- "5G End-to-End Architecture Framework v2.0", 30 April 2018 (2018-04-30), XP051449703, Retrieved from the Internet <URL:http://www.3gpp.org/ftp/tsg%5Fsa/WG1%5FServ/TSGS1%5F82%5FDubrovnik/docs/> [retrieved on 20180430]
- "3rd Generation Partnership Project; Technical Specification Group Core Network and Terminals; 5G System - Phase 1; CT WG4 Aspects (Release 15)", 29 January 2018 (2018-01-29), XP051384057, Retrieved from the Internet <URL:http://www.3gpp.org/ftp/tsg%5Fct/WG4%5Fprotocollars%5Fex%2DCN4/TSGCT4%5F82%5FGothenburg/Docs/> [retrieved on 20180129]
- "3rd Generation Partnership Project; Technical Specification Group Services and System Aspects; Telecommunication management; Study on management and orchestration of network slicing for next generation network (Release 14)", 3 April 2017 (2017-04-03), XP051259205, Retrieved from the Internet <URL:http://www.3gpp.org/ftp/tsg_sa/WG5_TM/TSGS5_112/Docs/> [retrieved on 20170403]

## Description

### Arrière-plan de l'invention

L'invention se rapporte au domaine général des télécommunications.

Elle concerne plus particulièrement le contrôle de l'accès à un réseau d'un opérateur lorsque des dispositifs de communication bénéficient d'une connectivité réseau offerte via ce réseau mais fournie par un tiers distinct de l'opérateur du réseau.

L'invention s'applique ainsi de façon privilégiée mais non limitative aux objets connectés (quelle que soit la nature de ces objets, par exemple une tablette numérique, une ampoule connectée, un véhicule connecté, un capteur, etc.) embarquant une connectivité réseau qui n'est pas offerte directement par l'opérateur du réseau supportant cette connectivité mais par un tiers.

Avec les réseaux de télécommunications de cinquième génération (5G), et l'avènement des technologies de virtualisation des fonctions des réseaux (ou NFV pour Network Function Virtualization), les infrastructures d'hébergement de ces fonctions réseaux (des fonctions radio aux fonctions de routage) ont vocation à prendre la forme d'infrastructures informatiques standards, aptes à héberger n'importe quelle fonction réseau virtualisée sous forme de code informatique exécutable sur un système d'exploitation standard. Plus particulièrement, on s'oriente vers un hébergement des infrastructures dédiées à l'exécution des fonctions centralisées du réseau dans des centres de données (ou « datacenters » en anglais) centralisés, tandis que les infrastructures dédiées à l'exécution de fonctions de périphérie du réseau (telles que par exemple des fonctions de station de base radio) sont destinées à être hébergées par des centres de données de proximité de taille plus réduite, comme proposé notamment dans les travaux conduits par l'ETSI sur le « Multi-access Edge Computing » (ou MEC) décrits sur la page web http://www.etsi.org/technologies-clusters/technologies/multi-access-edge-computing.

Dans ce contexte de virtualisation, les réseaux de télécommunications s'ouvrent en outre aujourd'hui de plus en plus à des tiers, c'est-à-dire à d'autres acteurs que les opérateurs de ces réseaux. Dans les nouvelles architectures de réseaux 5G, il est ainsi envisagé de dédier des « tranches » de réseau (plus communément appelées « slices ») à un ou plusieurs tiers, chaque tranche de réseau répondant à des exigences de qualité de service spécifiques requises par le tiers (débit, latence, fiabilité, etc.). Une tranche de réseau désigne un ensemble de ressources, incluant des fonctions réseaux et des infrastructures matérielles hébergeant ces fonctions réseaux, qui combinées de façon appropriée, permettent de créer un support réseau répondant à des exigences de qualité et de performance données.

Le découpage d'un réseau en tranches permet ainsi de gérer et d'exploiter plusieurs réseaux virtuels sur une infrastructure de réseau physique commune. Ainsi, par exemple, un constructeur automobile peut bénéficier d'une tranche de réseau 5G pour les besoins en communication de ses véhicules tandis qu'un industriel spécialisé dans l'éclairage peut bénéficier d'une autre tranche de réseau 5G pour les besoins en communication de ses ampoules connectées, chacun de ces acteurs ayant des contraintes et des besoins techniques très différents et spécifiques. Ces tranches de réseau s'appuient sur des fonctions virtuelles instanciées dans le réseau de l'opérateur, virtuellement étanches les unes des autres, bien que reposant sur les mêmes ressources physiques du réseau de l'opérateur (en termes d'équipements mais aussi de spectre, etc.).

Même si les différentes tranches de réseau peuvent être conçues pour activer ou au contraire désactiver certaines fonctions réseaux selon les besoins des tiers auxquelles elles sont allouées, d'autres fonctions restent néanmoins mutualisées entre ces tranches de réseau, et sont mises en œuvre « en dehors » des tranches de réseau (c'est-à-dire avant la sélection des tranches de réseau à proprement parler) dans la version actuelle retenue de l'architecture des réseaux de télécommunications 5G (« Phase 1 »). Ainsi par exemple, l'authentification et le contrôle d'accès qui sont propres à chaque réseau d'accès, sont réalisés lors de l'attachement des dispositifs au réseau de l'opérateur en amont de la sélection des tranches de réseau associées à ces dispositifs. Autrement dit, ce n'est qu'une fois que l'authentification d'un dispositif ayant souscrit une connectivité réseau auprès d'un tiers a été valablement réalisée que la sélection de la tranche de réseau associée à ce tiers est opérée.

3GPP TR 23.799, SA WG2, V14.0.0, 16.12.2016, est une spécification du 3GPP étudiant l'architecture des systèmes 5G et en particulier la sélection d'une tranche par un terminal de communication. 3GPP TR 33.899, WG3, V1.3.0, 21.08.2017, est également une spécification du 3GPP qui se concentre sur les aspects sécurité.

On comprend bien dès lors que les tiers pouvant avoir des besoins très différents les uns des autres et spécifiques, une telle architecture n'est pas forcément bien adaptée et manque en tout état de cause de flexibilité.

### Objet et résumé de l'invention

L'invention est défini par les revendications indépendantes 1, 8-12 et 14-15. D'autres modes de réalisation sont définis par les revendications dépendantes 2-7, 13 et 16.

L'invention permet notamment de pallier cet inconvénient en proposant un procédé de gestion d'un attachement d'un dispositif de communication à un réseau d'un opérateur, afin de bénéficier d'une connectivité réseau fournie par un tiers via le réseau de l'opérateur, ledit procédé comprenant :
- une étape de réception, en provenance du dispositif de communication, d'une requête d'attachement au réseau de l'opérateur et d'un identifiant du tiers ;
- une étape d'obtention en utilisant l'identifiant du tiers, d'une information de contact d'une passerelle de contrôle logicielle instanciée pour contrôler un accès à une tranche du réseau allouée par l'opérateur au tiers, cette information de contact comprenant une adresse de joignabilité de la passerelle de contrôle logicielle ou un identifiant de la tranche du réseau allouée au tiers et dont un accès est contrôlé par la passerelle de contrôle logicielle ; et
- une étape d'envoi d'un message au dispositif contenant l'information de contact et invitant le dispositif de communication à s'attacher auprès de la passerelle de contrôle logicielle en utilisant cette information de contact.

Corrélativement, l'invention vise aussi une entité réseau logicielle, instanciée pour gérer l'attachement d'au moins un dispositif de communication à un réseau d'un opérateur afin de bénéficier d'une connectivité réseau fournie par un tiers via le réseau de l'opérateur, cette entité réseau logicielle comprenant :
- un module de réception, apte à recevoir en provenance dudit dispositif de communication une requête d'attachement au réseau de l'opérateur et un identifiant du tiers ;
- un module d'obtention, configuré pour obtenir en utilisant l'identifiant du tiers, une information de contact d'une passerelle de contrôle logicielle instanciée pour contrôler un accès à une tranche du réseau allouée par l'opérateur au tiers, cette information de contact comprenant une adresse de joignabilité de la passerelle de contrôle logicielle ou un identifiant de la tranche du réseau allouée par l'opérateur au tiers et dont l'accès est contrôlé par la passerelle de contrôle logicielle ; et
- un module d'envoi, configuré pour envoyer un message au dispositif de communication contenant l'information de contact et invitant le dispositif à s'attacher auprès de la passerelle de contrôle logicielle en utilisant cette information de contact.

L'invention concerne également un système informatique comprenant :
- une entité réseau logicielle selon l'invention instanciée pour gérer l'attachement d'au moins un dispositif de communication au réseau de l'opérateur afin de bénéficier d'une connectivité réseau fournie par le tiers via le réseau de l'opérateur ; et
- une passerelle de contrôle logicielle instanciée pour contrôler un accès à une tranche du réseau de l'opérateur allouée au tiers.

Aucune limitation n'est attachée à la nature du système informatique selon l'invention. Il peut s'agir d'un serveur ou de tout autre dispositif équipé de ressources informatiques et réseaux, tel que par exemple un centre de données.

Selon un autre aspect, l'invention vise aussi un procédé d'accès par un dispositif de communication à une connectivité réseau fournie par un tiers via un réseau d'un opérateur, ce procédé comprenant :
- une étape de demande d'attachement au réseau de l'opérateur comprenant la fourniture d'un identifiant du tiers ;
- une étape de réception d'un message contenant une information de contact d'une passerelle de contrôle logicielle instanciée pour contrôler un accès à une tranche du réseau allouée par l'opérateur au tiers, cette information de contact comprenant une adresse de joignabilité de la passerelle de contrôle logicielle ou un identifiant de la tranche de réseau dont l'accès est contrôlé par la passerelle de contrôle logicielle, ledit message invitant le dispositif de communication à s'attacher auprès de la passerelle de contrôle logicielle;
- une étape de demande d'attachement auprès de la passerelle de contrôle logicielle en utilisant l'information de contact ; et
- une étape d'accès par le dispositif de communication à une connectivité réseau via la tranche du réseau de l'opérateur allouée au tiers.

Corrélativement, elle concerne aussi un dispositif de communication comprenant :
- un premier module de demande, configuré pour demander un attachement à un réseau d'un opérateur afin de bénéficier d'une connectivité réseau fournie par un tiers via le réseau de l'opérateur, ledit module de demande étant configuré pour fournir un identifiant du tiers ;
- un module de réception, apte à recevoir un message contenant une information de contact d'une passerelle de contrôle logicielle instanciée pour contrôler un accès à une tranche du réseau allouée par l'opérateur au tiers, cette information de contact comprenant une adresse de joignabilité de la passerelle de contrôle logicielle ou un identifiant de la tranche de réseau dont l'accès est contrôlé par la passerelle de contrôle logicielle, ledit message invitant le dispositif à s'attacher auprès de la passerelle de contrôle logicielle;
- un deuxième module de demande, configuré pour demander un attachement auprès de la passerelle de contrôle logicielle en utilisant l'information de contact ; et
- un module d'accès activé, configuré pour accéder à la tranche du réseau de l'opérateur et fournir au dispositif de communication une connectivité réseau via ladite tranche du réseau de l'opérateur allouée au tiers.

Aucune limitation n'est attachée à la nature du dispositif de communication auquel s'applique l'invention. Il peut s'agir de tout type d'objet disposant de moyens de communication via un réseau (quel que soit ce réseau, ex. sans fil, mobile, courte portée, etc.), tel que par exemple un objet connecté (ex. objet IoT telle qu'une ampoule connectée, un véhicule connecté, etc.), une tablette numérique, un téléphone, etc.

Ainsi, l'invention propose de découpler le contrôle d'accès et l'authentification des dispositifs de communication bénéficiant d'une connectivité réseau offerte par un tiers via le réseau de l'opérateur, des fonctions réseaux réalisées par l'opérateur du réseau. Cette approche permet d'augmenter la flexibilité de l'architecture du réseau de l'opérateur dans un contexte d'ouverture de ce réseau à des tiers, et offre la possibilité aux tiers d'adapter le contrôle d'accès mis en œuvre à leurs besoins. En effet, grâce à l'invention, les politiques et les mécanismes de contrôle d'accès et d'authentification mis en œuvre ne sont plus imposés et limités par la technologie d'accès utilisée par les dispositifs de communication pour accéder au réseau de l'opérateur mais peuvent être définis et choisis par les tiers eux-mêmes, en collaboration avec l'opérateur du réseau, en fonction de leurs besoins spécifiques. Autrement dit, l'invention permet, dans un contexte où des dispositifs de communication embarquant une connectivité réseau sont gérés par des tiers distincts de l'opérateur du réseau, d'offrir la possibilité à ces tiers de maîtriser les règles d'accès à la tranche de réseau qui leur est allouée.

L'invention s'appuie avantageusement à cet effet sur l'instanciation de passerelles de contrôle d'accès logicielles pour chaque tiers bénéficiant d'une tranche de réseau dans le réseau de l'opérateur, vers lesquelles le réseau de l'opérateur renvoie les dispositifs de communication lorsque ceux-ci tentent de s'attacher au réseau afin d'obtenir une connectivité réseau. Plus précisément, chaque passerelle de contrôle d'accès logicielle associée à un tiers est instanciée pour contrôler l'accès à la tranche de réseau allouée à ce tiers. Conformément à l'invention, le contrôle d'accès et l'authentification des dispositifs de communication sont donc réalisés après la sélection des tranches de réseau concernées par les requêtes d'attachement des dispositifs de communication en question. Ils peuvent donc être choisis par le tiers, qui grâce à la passerelle de contrôle logicielle qui lui est dédiée, peut définir sa propre session d'authentification (i.e. les critères, les algorithmes, etc. retenus pour cette authentification) sans être tributaire des choix faits en la matière par l'opérateur du réseau. Le procédé de gestion selon l'invention est préférentiellement mis en œuvre sans authentification préalable du dispositif de communication auprès du réseau de l'opérateur.

L'invention est ainsi relativement simple à mettre en œuvre et particulièrement bien adaptée au contexte actuel d'ouverture des réseaux de télécommunications à des tiers.

En outre, le recours à des fonctions logicielles (entité réseau logicielle et passerelle de contrôle logicielle) offre la possibilité au tiers d'adapter dynamiquement et/ou de mettre à jour la politique de contrôle d'accès qu'il souhaite appliquer aux dispositifs de communication dont il gère la connectivité réseau. Il peut notamment ajouter facilement des mécanismes de contrôle d'accès ou modifier les règles qui sont appliquées par ces mécanismes, etc. L'invention offre une grande flexibilité dans la définition du contrôle d'accès, qui ne nécessite pas d'intervention laborieuse pour ajouter/supprimer/modifier le contrôle d'accès mis en œuvre : une simple modification du code informatique exécuté par la passerelle de contrôle logicielle est suffisant.

De plus, ces différentes fonctions logicielles peuvent être aisément mises en œuvre par un système informatique, ce qui simplifie fortement l'infrastructure sur laquelle s'appuie l'architecture du réseau. Comme mentionné précédemment, dans un mode particulier de réalisation ce système informatique peut être un centre de données, et la passerelle de contrôle et l'entité de réseau être des fonctions exécutées par des machines virtuelles (on parle alors de passerelle de contrôle virtuelle et d'entité réseau virtuelle) s'appuyant sur les ressources informatiques et réseaux de ce centre de données.

La sélection de la tranche de réseau correspondant au tiers fournissant au dispositif de communication l'offre de connectivité réseau, et ainsi de la passerelle contrôlant l'accès à cette tranche de réseau, est permise grâce à l'identifiant du tiers transmis par le dispositif de communication au réseau de l'opérateur lors de sa demande d'attachement.

Dans un mode particulier de réalisation, l'identifiant du tiers est fourni dans la requête d'attachement envoyée par le dispositif de communication au réseau.

Grâce à cet identifiant, le réseau peut identifier facilement vers quelle passerelle de contrôle logicielle orienter le dispositif de communication pour s'attacher.

Aucune limitation n'est attachée à la nature de cet identifiant : il peut s'agir d'un nom, d'un code ou de toute chaîne alphanumérique, d'une clé cryptographique (ex. une clé de chiffrement publique), etc. transmis en clair ou de façon cryptée au réseau lors de l'attachement du dispositif de communication.

En variante, l'identifiant du tiers peut être fourni par le dispositif de communication lors d'un échange mis en place entre le réseau et le dispositif de communication dans le cadre de sa demande d'attachement. Il peut par exemple faire l'objet d'un challenge (ou d'un défi) aléatoire mis en œuvre à partir d'un matériel cryptographique embarqué dans le dispositif de communication et fourni par le tiers au réseau de l'opérateur.

Dans un mode particulier de réalisation, le procédé de gestion comprend :
- une étape préalable d'instanciation de la passerelle de contrôle logicielle pour exécuter un code informatique mettant en œuvre une fonction définie par le tiers de contrôle de l'accès à la tranche du réseau allouée par l'opérateur au tiers ; et
- une étape de mémorisation, dans une base de données, d'un identifiant du tiers en association avec une adresse de joignabilité (ex. une URL pour Uniform Resource Locator ou une URI pour Uniform Resource Identifier, ou un pointeur) de la passerelle de contrôle logicielle instanciée ou avec un identifiant de la tranche de réseau allouée par l'opérateur au tiers.

Dans ce mode de réalisation, la passerelle de contrôle logicielle réalisant le contrôle d'accès à la tranche de réseau allouée au tiers est instanciée en préliminaire de la réception de toute requête d'attachement d'un dispositif de communication ayant souscrit à une connectivité réseau auprès du tiers. L'instanciation de la passerelle de contrôle associée au tiers peut être réalisée par exemple lorsque le tiers s'entend avec l'opérateur du réseau pour bénéficier d'une tranche du réseau pour offrir une connectivité réseau aux dispositifs de communication qu'il gère. Ceci permet d'accélérer le traitement des requêtes d'attachement émises par les dispositifs de communication gérés par le tiers.

Dans un autre mode de réalisation, la passerelle de contrôle logicielle est instanciée dynamiquement, suite à la réception de la requête d'attachement du dispositif de communication, pour exécuter un code informatique mettant en œuvre une fonction définie par le tiers de contrôle de l'accès à la tranche du réseau allouée par l'opérateur au tiers, ce code informatique étant obtenu en interrogeant une bibliothèque de fonctions réseaux logicielles au moyen de l'identifiant du tiers.

Notamment, la passerelle de contrôle logicielle attachée à un tiers peut être instanciée lors de la réception par le réseau de l'opérateur de la première requête émanant d'un dispositif de communication géré par le tiers.

Dans un mode particulier de réalisation, le procédé de gestion est mis en œuvre par une entité réseau logicielle hébergée dans un centre de données dit de proximité, ledit centre de données de proximité hébergeant également la passerelle de contrôle logicielle et un point d'accès d'un réseau d'accès auquel est connecté le dispositif de communication et utilisé par le dispositif de communication pour accéder au réseau de l'opérateur.

Un tel point d'accès est par exemple une station de base c'est-à-dire un noeud eNodeB pour une technologie radio 4G ou un gNodeB pour une technologie radio 5G. L'entité réseau logicielle et la passerelle de contrôle logicielle peuvent alors soit être implémentées de façon autonome soit s'appuyer sur une partie des fonctions déjà réalisées par le point d'accès.

Corrélativement, le centre de données selon l'invention peut comprendre un point d'accès d'un réseau d'accès auquel est connecté le dispositif de communication et utilisé par le dispositif de communication pour accéder au réseau de l'opérateur.

L'invention, dans ce mode de réalisation, propose une approche innovante définissant une architecture de réseau d'accès minimaliste apte à mettre en œuvre les principales fonctions d'un réseau nécessaires pour supporter l'ouverture de ce réseau à des tiers sans pour autant prédéfinir le réseau cœur. Cette approche s'appuie sur un découplage jusqu'ici peu considéré dans la conception d'architectures réseaux, mais qui permet d'augmenter la flexibilité de l'ensemble de l'architecture. Ce mode de réalisation simplifie en outre grandement l'architecture du réseau cœur de l'opérateur, en le déchargeant de fonctions qui sont réalisées en périphérie du réseau au niveau du réseau d'accès.

En outre, le recours à des fonctions logicielles permet comme mentionné précédemment de simplifier la mise à jour éventuelle du contrôle d'accès réalisé pour chaque tranche de réseau.

Dans un mode particulier de réalisation, les différentes étapes du procédé de gestion et/ou du procédé d'accès sont déterminées par des instructions de programmes d'ordinateurs.

En conséquence, l'invention vise aussi un programme d'ordinateur sur un support d'informations, ce programme étant susceptible d'être mis en œuvre dans une entité réseau logicielle, dans un dispositif de communication ou plus généralement dans un ordinateur, ce programme comportant des instructions adaptées à la mise en œuvre des étapes d'un procédé de gestion ou d'un procédé d'accès tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communication comprenant :
- un dispositif de communication selon l'invention ayant souscrit à une connectivité réseau fournie par un tiers via une tranche d'un réseau d'un opérateur ;
- une entité réseau logicielle selon l'invention instanciée pour gérer l'attachement du dispositif au réseau de l'opérateur afin de bénéficier de ladite connectivité réseau ; et
- une passerelle de contrôle logicielle instanciée pour contrôler l'accès à la tranche du réseau de l'opérateur allouée au tiers.

On peut également envisager, dans d'autres modes de réalisation, que le procédé de gestion, l'entité réseau logicielle, le procédé d'accès, le dispositif de communication et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention dans un mode particulier de réalisation ;
- les figures 2 et 3 représentent l'architecture matérielle d'un centre de données et d'un dispositif de communication conformes à l'invention dans un mode particulier de réalisation ;
- la figure 4 représente les principales étapes d'un procédé de gestion et d'un procédé d'accès selon l'invention dans un mode particulier de réalisation.

### Description détaillée de l'invention

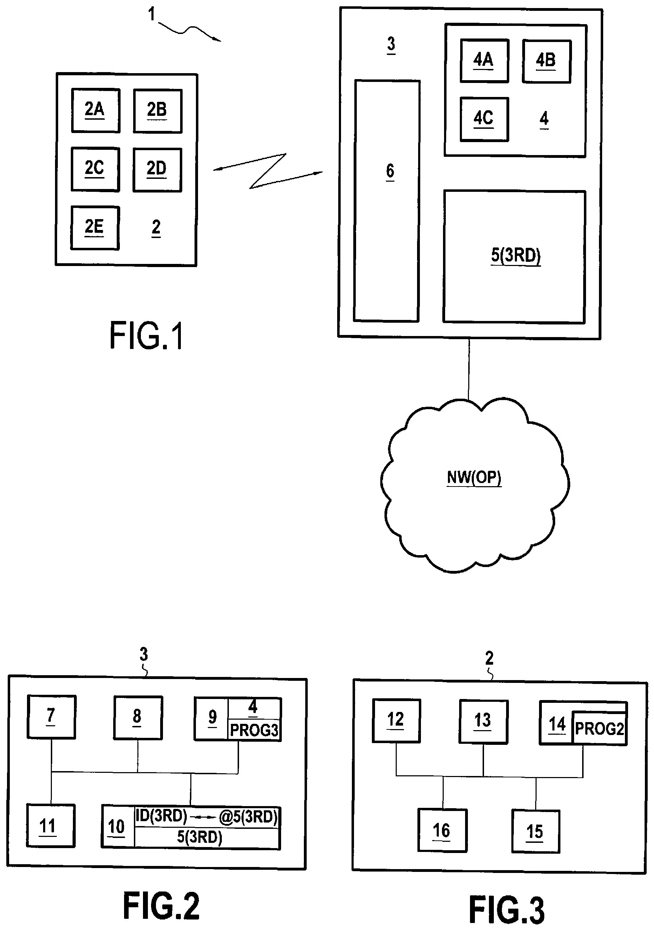

La **figure 1** représente, dans son environnement, un système 1 de communication conforme à l'invention, dans un mode particulier de réalisation dans lequel il permet à un dispositif de communication 2 de bénéficier d'une connectivité réseau offerte par un tiers 3RD via un réseau NW d'un opérateur (OP). Le réseau NW est par exemple ici un réseau de télécommunications 5G. Toutefois cette hypothèse n'est pas limitative en soi, et d'autres types de réseaux de télécommunications peuvent être envisagés comme par exemple un réseau de communication filaire (fibre ou ADSL).

Par tiers, on entend ici tout acteur distinct de l'opérateur OP du réseau NW, disposant d'un accord avec l'opérateur OP lui octroyant une tranche virtuelle (« slice ») du réseau NW, notée SLI(3RD), à laquelle les dispositifs de communication gérés par le tiers peuvent accéder en vue de communiquer avec d'autres dispositifs et de bénéficier d'une connectivité réseau, autrement dit d'un accès à l'ensemble des ressources du tiers connectées à la même tranche de réseau, ainsi éventuellement qu'à d'autres ressources via le réseau Internet ou via d'autres tranches de réseau virtuelles. Un tel tiers est par exemple le constructeur des dispositifs de communication considérés. Comme mentionné précédemment, une tranche d'un réseau désigne un ensemble de ressources, incluant des fonctions réseaux et des infrastructures matérielles hébergeant ces fonctions réseaux, qui combinées de façon appropriée, permettent de créer un support réseau répondant à des exigences de qualité et de performance données (en l'espèce ici celles définies par le tiers 3RD).

Aucune limitation n'est attachée à la nature du dispositif de communication 2. Il peut s'agir de tout type d'objet communiquant sans fil, c'est-à-dire qui embarque un module de connectivité réseau pour communiquer avec d'autres dispositifs, c'est-à-dire ici, des moyens (comme une carte, une interface de communication, etc.) de se connecter au réseau NW. Un tel objet communiquant est par exemple un objet connecté tel un véhicule connecté, une ampoule connectée, etc., une tablette numérique, un téléphone, etc. On s'intéresse plus particulièrement ici au cas où le logiciel d'authentification situé dans le module de connectivité réseau embarqué par le dispositif de communication 2 est conçu par le tiers 3RD et non par l'opérateur OP du réseau NW.

Conformément à l'invention, le système 1 de communication comprend un système informatique 3 (comprenant un ou plusieurs ordinateurs) hébergeant une entité réseau logicielle 4 conforme à l'invention, ainsi qu'une passerelle de contrôle logicielle 5(3RD) instanciée pour le tiers 3RD pour contrôler l'accès à la tranche SLI(3RD) du NW réseau allouée au tiers par l'opérateur OP.

Dans le mode de réalisation envisagé à la figure 1, le système informatique 3 est un centre de données dit de proximité, situé en périphérie du réseau NW, et plus particulièrement au niveau du réseau d'accès radio utilisé par le dispositif de communication 2 pour accéder au réseau NW.

En outre, la passerelle de contrôle logicielle 5(3RD) et l'entité réseau logicielle 4 sont ici des fonctions virtuelles exécutées par des machines virtuelles du centre de données 3. De telles fonctions virtuelles de façon connue, voient une abstraction des ressources physiques du système sur lequel elles sont hébergées et ne s'exécutent pas directement sur ces ressources physiques. Une telle abstraction permet à plusieurs machines virtuelles de partager les ressources physiques du système. On note toutefois que cette hypothèse n'est pas limitative : la passerelle de contrôle et l'entité réseau sont de manière générale des fonctions logicielles indépendamment de l'utilisation ou non d'une technologie de virtualisation des ressources informatiques. La virtualisation facilite la mise en œuvre de telles fonctions logicielles mais ne constitue pas un prérequis pour l'invention. D'autres technologies, comme par exemple la technologie OSGi (Open Services Gateway initiative), peuvent être utilisées en variante pour mettre en œuvre l'invention et instancier la passerelle de contrôle et l'entité réseau logicielles.

Plus spécifiquement, dans le mode de réalisation décrit ici, le centre de données 3 intègre également les éléments matériels (ex. serveurs informatiques ; liaisons numériques aux antennes radio) et les fonctions logicielles inclus classiquement dans un point d'accès du réseau d'accès (désignés de façon globale par la référence 6), aussi plus communément appelé unité de bande de base (Base Band Unit ou BBU) dans le contexte des réseaux cellulaires. Aucune limitation n'est attachée à la technologie d'accès radio mise en œuvre à proprement parler par le point d'accès 6 (pour communiquer notamment avec le dispositif de communication 2) : il peut s'agir d'une technologie d'accès cellulaire, WiFi, etc.

On note que dans l'exemple envisagé à la figure 1, le point d'accès 6 et l'entité réseau logicielle 4 sont représentées comme des entités autonomes. Toutefois dans une variante de réalisation, l'entité réseau logicielle 4 selon l'invention peut être implémentée en réutilisant une partie des fonctions mises en œuvre par le point d'accès 6, complétée par des instructions de code informatique supplémentaires afin de remplir sa fonction d'entité réseau logicielle conforme à l'invention.

Dans le mode de réalisation décrit ici, le centre de données 3 a l'architecture matérielle d'un ordinateur telle qu'illustrée à la **figure 2****.**

Il comprend notamment un processeur 7, une mémoire vive 8, une mémoire morte 9, une mémoire de masse 10 (ex. mémoire flash non volatile, disque dur, etc.), ainsi que des moyens de communication 11 lui permettant de communiquer avec les équipements du réseau NW et avec le dispositif de communication 2 via le point d'accès 6.

Dans le mode de réalisation décrit ici, la mémoire morte 9 du centre de données 3 contient le code informatique exécuté par l'entité réseau logicielle 4 selon l'invention. La mémoire morte 9 constitue un support d'enregistrement conforme à l'invention, lisible par le processeur 7 et sur lequel est enregistré un programme d'ordinateur PROG3 conforme à l'invention, comportant des instructions pour l'exécution des étapes du procédé de gestion selon l'invention. On suppose ici que les passerelles de contrôle d'accès instanciées pour chaque tiers (et notamment la passerelle 5(3RD)) sont des fonctions logicielles mémorisées dans la mémoire de masse 10 du centre de données 3.

Le programme d'ordinateur PROG3 définit ici des modules fonctionnels et logiciels de l'entité réseau logicielle 4 qui utilisent ou s'appuient sur les éléments matériels 7-11 du centre de données 3 mentionnés précédemment. Ces modules comprennent notamment, comme illustré à la figure 1 :
- un module 4A de réception, apte à recevoir en provenance d'un dispositif de communication tel que le dispositif de communication 2 une requête d'attachement au réseau NW de l'opérateur OP et un identifiant ID(3RD) du tiers 3RD gérant la connectivité réseau du dispositif de communication 2. Aucune limitation n'est attachée à la nature de l'identifiant ID(3RD) : il peut s'agir d'une chaîne alphanumérique telle qu'un code, ou un matériel cryptographique tel qu'une clé de chiffrement publique allouée au tiers 3RD, etc. ;
- un module 4B d'obtention, configuré pour obtenir en utilisant l'identifiant ID(3RD) du tiers 3RD, une information de contact d'une passerelle de contrôle logicielle instanciée pour contrôler un accès à une tranche du réseau allouée par l'opérateur au tiers 3RD, autrement dit ici, une information de contact de la passerelle de contrôle logicielle 5(3RD). Cette information de contact peut être de différente nature, mais elle permet d'accéder directement ou indirectement à la passerelle de contrôle logicielle 5(3RD). Ainsi, il peut s'agir par exemple d'une adresse de joignabilité @5(3RD) de la passerelle de contrôle logicielle 5(3RD) telle qu'une adresse URL (Uniform Resource Locator) ou un pointeur vers cette passerelle. Il peut s'agir également en variante d'un identifiant noté IDSLI(3RD) de la tranche du réseau SLI(3RD) allouée par l'opérateur OP au tiers 3RD et dont l'accès est contrôlé par la passerelle de contrôle logicielle, cet identifiant étant associé au niveau du centre de données 3, et plus particulièrement du point d'accès 6, à l'adresse de joignabilité @5(3RD) de la passerelle de contrôle 5(3RD) associée au tiers 3RD ; et
- un module 4C d'envoi, configuré pour envoyer un message au dispositif de communication 2 contenant l'information de contact (@5(3RD) ou IDSLI(3RD)) et invitant le dispositif de communication 2 à s'attacher auprès de la passerelle de contrôle logicielle 5(3RD) en utilisant cette information de contact.

Les fonctions des modules 4A à 4C sont décrites plus en détail ultérieurement en référence aux étapes du procédé de gestion selon l'invention.

De façon similaire, dans le mode de réalisation décrit ici, le dispositif de communication 2 a l'architecture matérielle d'un ordinateur telle qu'illustrée à la **figure 3****.**

Il comprend notamment un processeur 12, une mémoire vive 13, une mémoire morte 14, une mémoire flash non volatile 15, ainsi que des moyens de communication 16 lui permettant de communiquer avec les équipements du réseau NW via le point d'accès 6.

Dans le mode de réalisation décrit ici, la mémoire morte 14 du dispositif de communication 2 constitue un support d'enregistrement conforme à l'invention, lisible par le processeur 12 et sur lequel est enregistré un programme d'ordinateur PROG2 conforme à l'invention, comportant des instructions pour l'exécution des étapes du procédé d'accès selon l'invention.

Ce programme d'ordinateur PROG2 définit ici des modules fonctionnels et logiciels du dispositif de communication 2 qui utilisent ou s'appuient sur les éléments matériels 12-16 du dispositif de communication 2 mentionnés précédemment. Ces modules comprennent notamment, comme illustré à la figure 1 :
- un premier module 2A de demande, configuré pour demander un attachement au réseau NW de l'opérateur OP afin de bénéficier de la connectivité réseau fournie par le tiers 3RD via le réseau NW, ce premier module 2A de demande étant configuré pour fournir un identifiant ID(3RD) du tiers (3RD) ;
- un module 2B de réception, apte à recevoir de l'entité réseau logicielle 4 un message contenant une information de contact de la passerelle de contrôle logicielle 5(3RD) instanciée pour contrôler l'accès à la tranche SLI(3RD) du réseau NW allouée par l'opérateur OP au tiers 3RD, cette information de contact comprenant, comme indiqué précédemment, l'adresse de joignabilité @5(3RD) de la passerelle de contrôle logicielle 5(3RD) ou l'identifiant IDSLI(3RD) de la tranche de réseau SLI(3RD) dont l'accès est contrôlé par la passerelle de contrôle logicielle 5(3RD). Conformément à l'invention, ce message invite le dispositif de communication 2 à s'attacher auprès de la passerelle de contrôle logicielle 5(3RD) ;
- un deuxième module 2C de demande, configuré pour demander un attachement auprès de la passerelle de contrôle logicielle 5(3RD) en utilisant l'information de contact reçue ;
- un module 2D d'authentification (optionnel), configuré pour authentifier le dispositif de communication 2 auprès de la passerelle de contrôle logicielle 5(3RD) ; et
- un module 2E d'accès configuré pour accéder à la tranche SLI(3RD) du réseau NW de l'opérateur OP et fournir ainsi au dispositif de communication 2 une connectivité réseau via cette tranche SLI(3RD) du réseau NW.

Les fonctions des modules 2A à 2E sont décrites plus en détail maintenant en référence aux étapes du procédé d'accès selon l'invention.

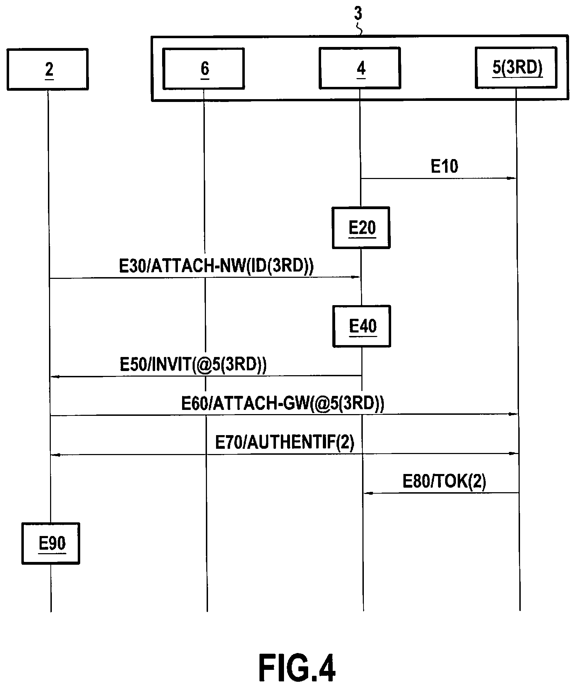

La **figure 4** représente, sous forme de diagramme, les principales étapes d'un procédé de gestion et les principales étapes d'un procédé d'accès telles qu'elles sont mises en œuvre respectivement, dans un premier mode de réalisation, par l'entité réseau logicielle 4 et par le dispositif de communication 2.

Dans le mode de réalisation représenté à la figure 4, on suppose que lors d'une étape préliminaire faisant suite à l'allocation de la tranche de réseau virtuelle SLI(3RD) par l'opérateur OP du réseau NW au tiers 3RD, la passerelle de contrôle 5(3RD) est instanciée dans le centre de données 3 de proximité (étape E10). Cette instanciation est réalisée, dans le mode de réalisation décrit ici, par l'entité réseau logicielle 4 à qui on fournit l'identifiant ID(3RD) du tiers 3RD (sous forme cryptée ou non), et qui instancie (i.e. créée) un module logiciel (ce module logiciel étant, dans le mode de réalisation décrit ici, une machine virtuelle ou tout autre container) pour exécuter un code informatique définissant le mécanisme de contrôle d'accès destiné à être appliqué pour contrôler l'accès à la tranche de réseau SLI(3RD). On suppose que ce mécanisme a été sélectionné ou prédéfini par le tiers 3RD (en accord avec l'opérateur OP) et codé sous forme d'un code informatique utilisé par l'entité réseau logicielle 4 pour instancier la passerelle 5(3RD). Ce code informatique est disponible par exemple dans une librairie ou dans une bibliothèque de fonctions réseau logicielles (fonctions réseau virtuelles dans la mode de réalisation décrit ici) tierces, en association avec l'identifiant ID(3RD) du tiers 3RD. Cette bibliothèque de fonctions peut être stockée au niveau du centre de données 3 ou dans un autre centre de données (par exemple dans un centre de données centralisé tel que décrit précédemment situé dans le réseau NW).

En variante, la passerelle 5(3RD) peut être instanciée par une autre entité que l'entité réseau logicielle 4, telle que par exemple par une fonction de gestion de fonctions réseaux logicielles instanciée dans le centre de données 3 et telle que décrite dans le projet MANO (NFV Management and Orchestration) proposé par l'ETSI. A l'issue de l'instanciation de la passerelle 5(3RD), l'identifiant ID(3RD) est fourni à l'entité réseau logicielle 4.

Suite à l'instanciation de la passerelle 5(3RD), l'entité réseau logicielle 4 mémorise dans une table contenue par exemple dans sa mémoire non volatile 10, l'identifiant ID(3RD) du tiers 3RD en association avec une information de contact de la passerelle 5(3RD) nouvellement instanciée (étape E20). Dans le mode de réalisation décrit ici, cette information de contact est une adresse de joignabilité @5(3RD) de la passerelle 5(3RD) telle qu'une URL ou un pointeur vers le module logiciel instanciant la passerelle 5(3RD).

En variante, cette information de contact peut être l'identifiant IDSLI(3RD) de la tranche de réseau SLI(3RD) allouée au tiers 3RD par l'opérateur OP.

On suppose maintenant que le dispositif de communication 2 souhaite s'attacher au réseau NW pour bénéficier de la connectivité réseau offerte (et gérée) par le tiers 3RD. De façon connue en soi, l'attachement d'un dispositif de communication à un réseau désigne la procédure qui permet classiquement au dispositif d'établir une connexion initiale avec un point d'accès à ce réseau (par exemple après une extinction du dispositif, etc.). Une telle procédure peut comprendre par exemple l'authentification du dispositif de communication, la récupération de son profil de service (et de ses droits), l'enregistrement de la localisation du dispositif pour permettre le routage des données vers ce dispositif, etc.

A cet effet, le dispositif de communication 2 envoie via son premier module 2A de demande et le point d'accès 6, une requête d'attachement au réseau NW désignée par ATTACH-NW (étape E30). Cette requête d'attachement contient ici l'identifiant ID(3RD) du tiers 3RD lui fournissant la connectivité réseau, et est reçue ou interceptée par l'entité réseau logicielle 4 via son module 4A de réception. L'identifiant ID(3RD) peut être fourni en clair ou crypté dans la requête d'attachement adressée au réseau NW.

En variante, l'identifiant ID(3RD) peut être fourni à l'entité réseau logicielle 4 non pas directement dans la requête d'attachement ATTACH-NW, mais au cours d'un échange établi entre l'entité réseau logicielle 4 et le dispositif de communication 2 suite à la réception par l'entité réseau logicielle 4 de la requête d'attachement ATTACH-NW. Par exemple, l'identifiant ID(3RD) peut faire l'objet d'un challenge ou d'un défi aléatoire mis en œuvre entre l'entité réseau logicielle 4 et le dispositif de communication 2 à partir d'un matériel cryptographique embarqué (ex. par le tiers 3RD si celui-ci est le constructeur du dispositif de communication 2 notamment) dans le dispositif de communication 2 et fourni préalablement par le tiers 3RD à l'entité réseau logicielle 4.

En utilisant l'identifiant ID(3RD) du tiers contenu dans la requête d'attachement, l'entité réseau logicielle 4 obtient, par l'intermédiaire de son module 4B d'obtention, l'information de contact de la passerelle de contrôle 5(3RD) instanciée pour réaliser le contrôle de l'accès à la tranche de réseau SLI(3RD) allouée au tiers 3RD (étape E40). Cette information de contact est dans le mode de réalisation décrit ici, l'adresse @5(3RD) mémorisée dans sa mémoire non volatile 10 en association avec l'identifiant ID(3RD).

On note que l'entité réseau logicielle 4 peut re-router la requête d'attachement ATTACH-NW vers la passerelle de contrôle 5(3RD) pour réaliser des vérifications complémentaires, et effectuer par exemple un premier niveau de contrôle d'accès (basé par exemple sur une liste d'adresses MAC autorisées par la passerelle de contrôle 5(3RD) et communiquées à l'entité réseau 4, etc.). Si ce premier niveau de contrôle d'accès est positif pour le dispositif de communication 2, l'entité réseau 4 peut lui fournir un jeton qu'il utilisera ultérieurement comme preuve de cette autorisation préalable auprès de la passerelle de contrôle 5(3RD). Ceci permet de procéder à un filtrage des requêtes d'attachement.

Puis, l'entité réseau logicielle 4, par le biais de son module 4C d'envoi, envoie comme réponse à la requête d'attachement ATTACH-NW un message noté INVIT contenant l'information de contact @5(3RD) de la passerelle de contrôle 5(3RD) et invitant le dispositif de communication 2 à s'attacher auprès de la passerelle de contrôle 5(3RD) (c'est-à-dire notamment à établir une connexion avec celle-ci et à s'authentifier auprès d'elle) en utilisant l'information de contact transmise (étape E50).

En variante, comme mentionné précédemment, l'information de contact de la passerelle 5(3RD) obtenue par l'entité de réseau logicielle 4 peut être l'identifiant IDSLI(3RD) de la tranche de réseau SLI(3RD) allouée au tiers 3RD et sur laquelle l'entité logicielle 4 invite le dispositif de communication 2 à se connecter pour s'attacher auprès de la passerelle de contrôle 5(3RD) qui gère et contrôle l'accès à cette tranche de réseau.

Sur réception du message INVIT via son module 2B de réception, le dispositif de communication 2, par l'intermédiaire de son deuxième module 2C de demande, envoie une requête d'attachement notée ATTACH-GW à la passerelle de contrôle 5(3RD) en utilisant l'adresse de joignabilité @5(3RD) (étape E60). Cette requête d'attachement transite par le point d'accès 6 ; ainsi, pour permettre à la requête d'attachement destinée à la passerelle de contrôle 5(3RD) d'être correctement acheminée par le point d'accès 6 vers celle-ci, le deuxième module 2C de demande du dispositif de communication 2 peut inclure dans la requête d'attachement l'adresse @5(3RD) permettant au point d'accès 6 d'identifier l'entité à contacter.

En variante, si l'information de contact reçue par le dispositif de communication 2 est l'identifiant IDSLI(3RD) de la tranche de réseau virtuelle allouée au tiers 3RD, le deuxième module 2C de demande du dispositif de communication 2 peut inclure dans la requête d'attachement l'identifiant IDSLI(3RD), qui est ensuite utilisé par le point d'accès 6 pour déterminer l'adresse @5(3RD) de l'entité à contacter. A cet effet, le point d'accès 6 peut avoir été préalablement configuré par défaut avec l'adresse @5(3RD) de la passerelle de contrôle 5(3RD) associée au tiers 3RD et instanciée pour réaliser le contrôle de l'accès à la tranche de réseau identifiée par IDSLI(3RD). Cette configuration par défaut est par exemple réalisée de sorte que le point d'accès 6 adresse tous les messages véhiculés sur la tranche de réseau identifiée par IDSLI(3RD) vers la passerelle en question.

Dans le mode de réalisation décrit ici, sur réception de la requête d'attachement ATTACH-GW, la passerelle 5(3RD) de contrôle initie une session d'authentification avec le dispositif de communication 2 en vue d'authentifier ce dernier (étape E70). Aucune limitation n'est attachée aux moyens mis en œuvre lors de cette session d'authentification pour authentifier le dispositif de communication 2. Ainsi par exemple, l'authentification du dispositif de communication peut se faire via l'échange d'un login et d'un mot de passe, ou via un mécanisme de cryptographie asymétrique ou symétrique. Les mécanismes d'authentification à utiliser peuvent avoir été convenus au préalable entre le dispositif de communication 2 et le tiers 3RD (par exemple lors de la conception du dispositif de communication 2 ou de son firmware), soit être choisis dynamiquement par négociation entre le dispositif de communication 2 et la passerelle de contrôle 5(3RD). En d'autres mots, grâce à l'invention, via notamment la passerelle de contrôle instanciée pour le tiers 3RD, celui-ci peut définir ses propres mécanismes d'authentification (sans passer par l'opérateur du réseau).

En variante, aucun mécanisme d'authentification du dispositif de communication 2 n'est mis en œuvre par la passerelle de contrôle.

Dans un mode particulier de réalisation, si l'authentification du dispositif de communication 2 est positive, la passerelle de contrôle 5(3RD) génère un jeton TOK(2) (ou token) d'autorisation contenant les règles de contrôle d'accès définies par le tiers 3RD et auxquelles doit se soumettre le dispositif de communication 2, par exemple en termes de limite de débit, de durée de validité de l'autorisation, etc. (étape E80). Un tel jeton contenant les droits d'accès du dispositif de communication 2 peut par exemple être généré au format JWT (JSON Web Token), et/ou être signé par la passerelle de contrôle 5(3RD) afin de garantir son origine.

Le jeton TOK(2) généré par la passerelle de contrôle 5(3RD) peut être envoyé par celle-ci au dispositif de communication 2, qui le transmet à son tour à l'entité réseau logicielle 4 lorsque l'entité réseau 4 souhaite vérifier les droits d'accès du dispositif de communication 2.

En variante, le jeton TOK(2) généré par la passerelle de contrôle 5(3RD) peut être fourni directement par la passerelle de contrôle 5(3RD) à l'entité réseau logicielle 4 ou à toute autre entité de la tranche de réseau SLI(3RD) qui a besoin à un moment ou à un autre de contrôler les droits d'accès du dispositif de communication 2.

Le dispositif de communication 2 peut dès lors accéder, via son module d'accès 2E, à la tranche de réseau SLI(3RD) dédiée au tiers 3RD et bénéficier d'une connectivité réseau via le réseau NW (étape E90). L'entité réseau logicielle 4, sur réception de messages destinés à ou émis par le dispositif de communication 2 peut vérifier, grâce au contenu du jeton TOK(2) si ces messages vérifient les règles de contrôle d'accès définies par le tiers 3RD et auxquelles doit se soumettre le dispositif de communication 2

Dans une autre variante, la passerelle de contrôle 5(3RD) ne génère pas de jeton TOK(2) mais configure une interface de l'entité réseau logicielle 4 ou du point d'accès 6 avec les règles de contrôle d'accès auxquelles doit se soumettre le dispositif de communication 2 ou de manière plus générale avec les droits d'accès du dispositif de communication 2.

Dans une autre variante, tous les messages émis par le dispositif de communication 2 peuvent transiter par la passerelle de contrôle 5(3RD), qui en plus d'une fonction de contrôle d'accès, peut assurer une fonction de routage de ces messages. Ils peuvent notamment être envoyés directement par la passerelle vers un réseau géré par le tiers 3RD. Ce réseau peut être de nature quelconque comme par exemple un réseau Ethernet (auquel cas la passerelle 5(3RD) agit comme un commutateur Ethernet sur ce réseau).

Dans le premier mode de réalisation qui vient d'être décrit, la passerelle de contrôle 5(3RD) est instanciée lors d'une étape préalable E10, avant même qu'une requête d'attachement ne lui soit adressée par un dispositif de communication géré par le tiers 3RD.

Dans un deuxième mode de réalisation, la passerelle de contrôle 5(3RD) peut être instanciée dynamiquement suite par exemple à la réception de la première requête d'attachement d'un dispositif de communication 2 géré par le tiers 3RD. Dans ce mode de réalisation (qui ne comprend pas préalablement à l'étape E30, les étapes E10 et E20 illustrées à la figure 4), suite à la réception de la requête d'attachement ATTACH-NW du dispositif de communication 2 contenant l'identifiant ID(3RD) du tiers 3RD, l'entité réseau logicielle 4 vérifie si l'identifiant ID(3RD) du tiers 3RD est associé dans sa mémoire non volatile 10 à une information de contact d'une passerelle de contrôle d'accès (adresse de joignabilité ou identifiant de tranche de réseau).

Si c'est le cas, cela signifie qu'une passerelle de contrôle d'accès 5(3RD) a déjà été instanciée pour la tranche de réseau SLI(3RD) et le tiers 3RD. Les étapes E40 à E90 sont alors menées de façon identique à ce qui a été décrit précédemment en référence à la figure 4 et au premier mode de réalisation.

Sinon, dans le deuxième mode de réalisation décrit ici, l'entité réseau logicielle 4 interroge une bibliothèque de fonctions réseaux tierces pour obtenir un code informatique associé à l'identifiant ID(3RD), et définissant la fonction de contrôle d'accès destinée à être mise en œuvre par la passerelle de contrôle d'accès 5(3RD) pour contrôler l'accès à la tranche de réseau SLI(3RD). Cette bibliothèque peut être située soit au sein du centre de données 3 comme décrit précédemment, soit dans un centre de données centralisé situé dans le réseau NW par exemple.

Le code informatique correspondant à l'identifiant ID(3RD) est envoyé par la bibliothèque à l'entité réseau logicielle 4.

Sur réception de ce code informatique, l'entité réseau logicielle pilote l'instanciation de la passerelle de contrôle d'accès 5(3RD). Plus précisément, elle instancie (i.e. créée) un module logiciel (tel qu'une machine virtuelle ou tout autre container dans le mode de réalisation décrit ici) pour exécuter le code informatique obtenu de la bibliothèque de fonctions réseaux.

En variante, la passerelle 5(3RD) peut être instanciée par une autre entité que l'entité réseau logicielle 4, telle que par exemple par une fonction de gestion de fonctions réseaux logicielles instanciée dans le centre de données 3 et telle que décrite dans le projet MANO (NFV Management and Orchestration) proposé par l'ETSI. A l'issue de l'instanciation de la passerelle 5(3RD), l'identifiant ID(3RD) est fourni à l'entité réseau logicielle 4.

Les étapes E20 et E40 à E90 sont alors mises en œuvre de façon similaire à ce qui a été décrit précédemment pour le premier mode de réalisation.

## Revendications

1. Procédé de gestion d'un attachement d'un dispositif de communication (2) à un réseau (NW) d'un opérateur, afin que le dispositif de communication (2) bénéficie d'une connectivité réseau fournie par un tiers via le réseau de l'opérateur, ledit procédé comprenant les étapes suivantes exécutées par une entité réseau logicielle (4) instanciée pour gérer l'attachement du dispositif de communication (2) au réseau (NW) :
- une étape de réception (E30), en provenance du dispositif de communication, d'une requête d'attachement au réseau de l'opérateur et d'un identifiant du tiers (ID(3RD)) ;
- une étape d'obtention (E40) en utilisant l'identifiant du tiers, d'une information de contact d'une passerelle de contrôle logicielle (5(3RD)) instanciée pour contrôler un accès à une tranche du réseau allouée par l'opérateur au tiers, cette information de contact comprenant une adresse de joignabilité de la passerelle de contrôle logicielle ou un identifiant de la tranche du réseau allouée au tiers et dont un accès est contrôlé par la passerelle de contrôle logicielle ; et
- une étape d'envoi (E50) d'un message au dispositif de communication (2) contenant l'information de contact et invitant le dispositif de communication (2) à s'attacher auprès de la passerelle de contrôle logicielle en utilisant cette information de contact.

2. Procédé de gestion selon la revendication 1 **caractérisé en ce qu'**il est mis en œuvre sans authentification préalable du dispositif de communication auprès du réseau de l'opérateur.

3. Procédé de gestion selon la revendication 1 ou 2 dans lequel l'identifiant du tiers est fourni dans la requête d'attachement au réseau de l'opérateur.

4. Procédé de gestion selon l'une quelconque des revendications 1 à 3 dans lequel la passerelle de contrôle logicielle est instanciée dynamiquement, suite à la réception de la requête d'attachement du dispositif de communication, pour exécuter un code informatique mettant en œuvre une fonction définie par le tiers de contrôle de l'accès à la tranche du réseau allouée par l'opérateur au tiers, ce code informatique étant obtenu en interrogeant une bibliothèque de fonctions réseaux logicielles au moyen de l'identifiant du tiers.

5. Procédé de gestion selon l'une quelconque des revendications 1 à 3 comprenant :
- une étape préalable (E10) d'instanciation de la passerelle de contrôle logicielle pour exécuter un code informatique mettant en œuvre une fonction définie par le tiers de contrôle de l'accès à la tranche du réseau allouée par l'opérateur au tiers ; et
- une étape de mémorisation (E20), dans une base de données, d'un identifiant du tiers en association avec une adresse de joignabilité de la passerelle de contrôle logicielle instanciée ou avec un identifiant de la tranche de réseau allouée par l'opérateur au tiers.

6. Procédé de gestion selon l'une quelconque des revendications 1 à 5 **caractérisé en ce qu'**il est mis en œuvre par une entité réseau logicielle (4) hébergée dans un centre de données (3) dit de proximité situé dans un réseau d'accès utilisé par le dispositif de communication pour accéder au réseau de l'opérateur, le centre de données de proximité hébergeant également la passerelle de contrôle logicielle (5(3RD)).

7. Procédé de gestion selon la revendication 6 dans lequel le centre de données de proximité se trouve dans un point d'accès (6) du réseau d'accès.

8. Procédé d'accès par un dispositif de communication (2) à une connectivité réseau fournie par un tiers via un réseau (NW) d'un opérateur, ce procédé comprenant les étapes suivantes exécutées par le dispositif de communication (2) :
- une étape (E30) de demande d'attachement au réseau de l'opérateur comprenant la fourniture d'un identifiant du tiers (ID(3RD)), envoyée à une entité réseau logicielle (4) instanciée pour gérer l'attachement d'un dispositif de communication au réseau (NW) ;
- une étape (E50) de réception en provenance de l'entité réseau logicielle (4) d'un message contenant une information de contact d'une passerelle de contrôle logicielle (5(3RD)) instanciée pour contrôler un accès à une tranche du réseau allouée par l'opérateur au tiers, cette information de contact comprenant une adresse de joignabilité de la passerelle de contrôle logicielle ou un identifiant de la tranche de réseau dont l'accès est contrôlé par la passerelle de contrôle logicielle, ledit message invitant le dispositif de communication à s'attacher auprès de la passerelle de contrôle logicielle ;
- une étape (E60) de demande d'attachement auprès de la passerelle de contrôle logicielle (5(3RD)) en utilisant l'information de contact ; et
- une étape (E90) d'accès par le dispositif de communication (2) à une connectivité réseau via la tranche du réseau de l'opérateur allouée au tiers.

9. Programme d'ordinateur (PROG4, PROG2) comportant des instructions pour l'exécution des étapes du procédé de gestion selon l'une quelconque des revendications 1 à 7 ou pour l'exécution des étapes du procédé d'accès selon la revendication 8 lorsque ledit programme est exécuté par un ordinateur.

10. Support d'enregistrement (9, 14) lisible par un ordinateur sur lequel est enregistré un programme d'ordinateur selon la revendication 9.

11. Entité réseau logicielle (4), instanciée pour gérer l'attachement d'au moins un dispositif de communication à un réseau d'un opérateur afin de bénéficier d'une connectivité réseau fournie par un tiers via le réseau de l'opérateur, ladite entité réseau virtuelle comprenant :
- un module de réception (4A), apte à recevoir en provenance dudit dispositif de communication une requête d'attachement au réseau de l'opérateur et un identifiant du tiers ;
- un module d'obtention (4B), configuré pour obtenir en utilisant l'identifiant du tiers, une information de contact d'une passerelle de contrôle logicielle instanciée pour contrôler un accès à une tranche du réseau allouée par l'opérateur au tiers, cette information de contact comprenant une adresse de joignabilité de la passerelle de contrôle logicielle ou un identifiant de la tranche du réseau allouée par l'opérateur au tiers et dont l'accès est contrôlé par la passerelle de contrôle logicielle ; et
- un module d'envoi (4C), configuré pour envoyer un message au dispositif de communication contenant l'information de contact et invitant le dispositif de communication à s'attacher auprès de la passerelle de contrôle logicielle en utilisant cette information de contact.

12. Système informatique (3) comprenant :
- une entité réseau logicielle (4) selon la revendication 11 instanciée pour gérer l'attachement d'au moins un dispositif de communication au réseau de l'opérateur afin de bénéficier d'une connectivité réseau fournie par le tiers via le réseau de l'opérateur ; et
- une passerelle de contrôle logicielle (5(3RD)) instanciée pour contrôler un accès à une tranche du réseau de l'opérateur allouée au tiers.

13. Système informatique (3) selon la revendication 12 comprenant en outre un point d'accès d'un réseau d'accès auquel est connecté le dispositif de communication et utilisé par le dispositif de communication pour accéder au réseau de l'opérateur.

14. Dispositif de communication (2) comprenant :
- un premier module de demande (2A), configuré pour demander un attachement à un réseau d'un opérateur afin de bénéficier d'une connectivité réseau fournie par un tiers via le réseau de l'opérateur, ledit module de demande étant configuré pour fournir un identifiant du tiers ;
- un module de réception (2B), apte à recevoir un message contenant une information de contact d'une passerelle de contrôle logicielle instanciée pour contrôler un accès à une tranche du réseau allouée par l'opérateur au tiers, cette information de contact comprenant une adresse de joignabilité de la passerelle de contrôle logicielle ou un identifiant de la tranche de réseau dont l'accès est contrôlé par la passerelle de contrôle logicielle, ledit message invitant le dispositif à s'attacher auprès de la passerelle de contrôle logicielle;
- un deuxième module de demande (2C), configuré pour demander un attachement auprès de la passerelle de contrôle logicielle en utilisant l'information de contact ; et
- un module d'accès (2E), configuré pour accéder à la tranche du réseau de l'opérateur et fournir au dispositif de communication une connectivité réseau via ladite tranche du réseau de l'opérateur allouée au tiers.

15. Système (1) de communication comprenant :
- un dispositif de communication (2) selon la revendication 14 ayant souscrit à une connectivité réseau fournie par un tiers via une tranche d'un réseau d'un opérateur ; et
- un système informatique (3) selon la revendication 12 ou 13.

16. Système de communication (1) selon la revendication 15 dans lequel le système informatique est un centre de données.

## Patentansprüche

1. Verfahren zur Verwaltung einer Verbindung einer Kommunikationsvorrichtung (2) mit einem Netzwerk (NW) eines Betreibers, damit die Kommunikationsvorrichtung (2) eine von einem Dritten über das Netzwerk des Betreibers bereitgestellte Netzwerkkonnektivität nutzen kann, wobei das Verfahren die folgenden Schritte aufweist, die von einer Software-Netzwerkeinheit (4) ausgeführt werden, die instanziiert wurde, um die Anbindung der Kommunikationsvorrichtung (2) an das Netzwerk (NW) zu verwalten:
- einen Schritt zum Empfangen (E30) einer Anfrage von der Kommunikationsvorrichtung zur Verbindung mit dem Netzwerk des Betreibers und einer Kennung des Dritten (ID(3RD));
- einen Schritt zum Erhalten (E40) unter Verwendung der Kennung des Dritten einer Kontaktinformation eines Software-Kontrollgateways (5(3RD)), das instanziiert wurde, um einen Zugriff auf einen Netzwerkabschnitt zu kontrollieren, der dem Dritten vom Betreiber zugewiesen wurde, wobei diese Kontaktinformation eine Erreichbarkeitsadresse des Software-Kontrollgateways oder eine Kennung des dem Dritten zugewiesenen Netzwerkabschnitts aufweist, auf den ein Zugriff durch das Software-Kontrollgateway kontrolliert wird; und
- einen Schritt zum Senden (E50) einer Nachricht an die Kommunikationsvorrichtung (2), die die Kontaktinformation enthält und die Kommunikationsvorrichtung (2) auffordert, sich unter Verwendung dieser Kontaktinformation mit dem Software-Kontrollgateway zu verbinden.

2. Verfahren zur Verwaltung nach Anspruch 1, **dadurch gekennzeichnet, dass** es ohne vorherige Authentifizierung der Kommunikationsvorrichtung beim Netzwerk des Betreibers durchgeführt wird.

3. Verfahren zur Verwaltung nach Anspruch 1 oder 2, wobei die Kennung des Dritten in der Anfrage zur Verbindung mit dem Netzwerk des Betreibers bereitgestellt wird.

4. Verfahren zur Verwaltung nach einem der Ansprüche 1 bis 3, wobei das Software-Kontrollgateway nach dem Empfang der Verbindungsanfrage der Kommunikationsvorrichtung dynamisch instanziiert wird, um einen Computercode auszuführen, der eine von dem Dritten definierte Funktion implementiert, die den Zugriff auf den vom Betreiber dem Dritten zugewiesenen Netzwerkabschnitt kontrolliert, wobei dieser Computercode durch Abfragen einer Bibliothek von Netzwerk-Softwarefunktionen unter Verwendung der Kennung des Dritten erhalten wird.

5. Verfahren zur Verwaltung nach einem der Ansprüche 1 bis 3, das Folgendes aufweist:
- einen vorausgehenden Schritt (E10) zum Instanziieren des Software-Kontrollgateways zur Ausführung eines Computercodes, der eine von dem Dritten definierte Funktion implementiert, die den Zugriff auf den vom Betreiber dem Dritten zugewiesenen Netzwerkabschnitt kontrolliert; und
- einen Schritt zum Speichern (E20) einer Kennung des Dritten in einer Datenbank in Verbindung mit einer Erreichbarkeitsadresse des instanziierten Software-Kontrollgateways oder mit einer Kennung des vom Betreiber dem Dritten zugewiesenen Netzwerkabschnitts.

6. Verfahren zur Verwaltung nach einem der Ansprüche 1 bis 5, **dadurch gekennzeichnet, dass** es von einer Software-Netzwerkeinheit (4) ausgeführt wird, die in einem sogenannten lokalen Datenzentrum (3) in einem Zugriffsnetzwerk gehostet wird, das von der Kommunikationsvorrichtung für den Zugriff auf das Netzwerk des Betreibers verwendet wird, wobei das lokale Datenzentrum auch das Software-Kontrollgateway (5(3RD)) hostet.

7. Verfahren zur Verwaltung nach Anspruch 6, wobei sich das lokale Datenzentrum in einem Zugriffspunkt (6) des Zugriffsnetzwerks befindet.

8. Verfahren für den Zugriff einer Kommunikationsvorrichtung (2) auf eine Netzwerkkonnektivität, die von einem Dritten über ein Netzwerk (NW) eines Betreibers bereitgestellt wird, wobei dieses Verfahren die folgenden Schritte aufweist, die von der Kommunikationsvorrichtung (2) ausgeführt werden:
- einen Schritt (E30) zum Anfordern einer Verbindung zum Netzwerk des Betreibers, der die Bereitstellung einer Kennung des Dritten (ID(3RD)) aufweist, die an eine Software-Netzwerkeinheit (4) gesendet wird, die zur Verwaltung der Verbindung einer Kommunikationsvorrichtung mit dem Netzwerk (NW) instanziiert wurde;
- einen Schritt (E50) zum Empfangen einer Nachricht von der Software-Netzwerkeinheit (4), die eine Kontaktinformation eines Software-Kontrollgateways (5(3RD)) enthält, das instanziiert wurde, um einen Zugriff auf einen Netzwerkabschnitt zu kontrollieren, der dem Dritten vom Betreiber zugewiesen wurde, wobei diese Kontaktinformation eine Erreichbarkeitsadresse des Software-Kontrollgateways oder eine Kennung des Netzabschnitts aufweist, zu dem der Zugriff durch das Software-Kontrollgateway kontrolliert wird, wobei die Nachricht die Kommunikationsvorrichtung auffordert, sich mit dem Software-Kontrollgateway zu verbinden;
- einen Schritt (E60) zum Anfordern einer Verbindung mit dem Software-Kontrollgateway (5(3RD)) unter Verwendung der Kontaktinformation; und
- einen Schritt (E90) zum Zugreifen durch die Kommunikationsvorrichtung (2) auf eine Netzwerkkonnektivität über den dem Dritten zugewiesenen Netzwerkabschnitt des Betreibers.

9. Computerprogramm (PROG4, PROG2), das Anweisungen beinhaltet, die bei der Ausführung des Programms durch einen Computer die Schritte des Verfahrens zur Verwaltung nach einem der Ansprüche 1 bis 7 oder zur Ausführung der Schritte des Verfahrens für den Zugriff nach Anspruch 8 ausführen.

10. Computerlesbares Speichermedium (9, 14), auf dem ein Computerprogramm nach Anspruch 9 gespeichert ist.

11. Software-Netzwerkeinheit (4), die instanziiert wurde, um die Verbindung mindestens einer Kommunikationsvorrichtung mit einem Netzwerk eines Betreibers zu verwalten, um eine von einem Dritten über das Netzwerk des Betreibers bereitgestellte Netzwerkkonnektivität zu nutzen, wobei die virtuelle Netzwerkeinheit Folgendes aufweist:
- ein Empfangsmodul (4A), das geeignet ist, eine Anfrage von der Kommunikationsvorrichtung zur Verbindung mit dem Netzwerk des Betreibers und eine Kennung des Dritten zu erhalten;
- ein Erhaltungsmodul (4B), das konfiguriert ist, unter Verwendung der Kennung des Dritten eine Kontaktinformation eines Software-Kontrollgateways zu erhalten, das instanziiert wurde, um einen Zugriff auf einen Netzwerkabschnitt zu kontrollieren, der dem Dritten vom Betreiber zugewiesen wurde, wobei diese Kontaktinformation eine Erreichbarkeitsadresse des Software-Kontrollgateways oder eine Kennung des dem Dritten vom Betreiber zugewiesenen Netzwerkabschnitts aufweist, zu dem der Zugriff durch das Software-Kontrollgateway kontrolliert wird; und
- ein Sendemodul (4C), das konfiguriert ist, eine Nachricht an die Kommunikationsvorrichtung zu senden, die die Kontaktinformation enthält und die Kommunikationsvorrichtung auffordert, sich unter Verwendung dieser Kontaktinformation mit dem Software-Kontrollgateway zu verbinden.

12. Computersystem (3), das Folgendes aufweist:
- eine Software-Netzwerkeinheit (4) nach Anspruch 11, die instanziiert wurde, um die Verbindung mindestens einer Kommunikationsvorrichtung mit dem Netzwerk des Betreibers zu verwalten, um eine von dem Dritten über das Netzwerk des Betreibers bereitgestellte Netzwerkkonnektivität zu nutzen; und
- ein Software-Kontrollgateway (5(3RD)), das instanziiert wurde, um einen Zugriff auf einen dem Dritten zugewiesenen Netzwerkabschnitt des Betreibers zu kontrollieren.

13. Computersystem (3) nach Anspruch 12, das darüber hinaus einen Zugriffspunkt eines Zugriffsnetzwerks aufweist, mit dem die Kommunikationsvorrichtung verbunden ist und der von der Kommunikationsvorrichtung verwendet wird, um auf das Netzwerk des Betreibers zuzugreifen.

14. Kommunikationsvorrichtung (2), die Folgendes aufweist:
- ein erstes Anforderungsmodul (2A), das so konfiguriert ist, dass es eine Verbindung mit einem Netzwerk eines Betreibers anfordert, um eine von einem Dritten über das Netzwerk des Betreibers bereitgestellte Netzwerkkonnektivität zu nutzen, wobei das Anforderungsmodul so konfiguriert ist, dass es eine Kennung des Dritten bereitstellt;
- ein Empfangsmodul (2B), das eine Nachricht empfangen kann, die eine Kontaktinformation eines Software-Kontrollgateways enthält, das instanziiert wurde, um einen Zugriff auf einen Netzwerkabschnitt zu kontrollieren, der dem Dritten vom Betreiber zugewiesen wurde, wobei diese Kontaktinformation eine Erreichbarkeitsadresse des Software-Kontrollgateways oder eine Kennung des Netzwerkabschnitts aufweist, zu dem der Zugriff durch das Software-Kontrollgateway kontrolliert wird, wobei die Nachricht die Vorrichtung auffordert, sich mit dem Software-Kontrollgateway zu verbinden;
- ein zweites Anforderungsmodul (2C), das so konfiguriert ist, dass es unter Verwendung der Kontaktinformation eine Verbindung bei dem Software-Kontrollgateway anfordert; und
- ein Zugriffsmodul (2E), das so konfiguriert ist, dass es auf den Netzwerkabschnitt des Betreibers zugreift und der Kommunikationsvorrichtung über den Netzwerkabschnitt des Betreibers, der dem Dritten zugewiesen ist, eine Netzwerkkonnektivität bereitstellt.

15. Kommunikationssystem (1), das Folgendes aufweist:
- eine Kommunikationsvorrichtung (2) nach Anspruch 14, die eine Netzwerkkonnektivität abonniert hat, die durch einen Dritten über einen Netzwerkabschnitt eines Betreibers bereitgestellt wird; und
- ein Computersystem (3) nach Anspruch 12 oder 13.

16. Kommunikationssystem (1) nach Anspruch 15, wobei das Computersystem ein Datenzentrum ist.

## Claims

1. Method for management of attachment of a communication device (2) to a network (NW) of an operator, in order for the communication device (2) to benefit from network connectivity provided by a third party via the network of the operator, said method comprising the following steps executed by a software network entity (4) instantiated to manage attachment of the communication device (2) to the network (NW):
- a step of receiving (E30), from the communication device, a request for attachment to the network of the operator and an identifier of the third party (ID(3RD));
- a step of obtaining (E40), using the identifier of the third party, contact information of a software control gateway (5(3RD)) instantiated to control access to a network slice allocated by the operator to the third party, this contact information comprising a reachability address of the software control gateway or an identifier of the network slice allocated to the third party and access to which is controlled by the software control gateway; and
- a step of sending (E50) a message to the communication device (2) containing the contact information and inviting the communication device (2) to attach to the software control gateway using this contact information.

2. Management method according to Claim 1, **characterized in that** it is implemented without prior authentication of the communication device by the network of the operator.

3. Management method according to Claim 1 or 2, wherein the identifier of the third party is provided in the request for attachment to the network of the operator.

4. Management method according to any of Claims 1 to 3, wherein the software control gateway is dynamically instantiated, following receipt of the attachment request from the communication device, to execute a computer code implementing a function defined by the third party to control access to the network slice allocated by the operator to the third party, this computer code being obtained by interrogating a library of software network functions by means of the identifier of the third party.

5. Management method according to any of Claims 1 to 3, comprising:
- a preliminary step (E10) of instantiating the software control gateway to execute a computer code implementing a function defined by the third party to control access to the network slice allocated by the operator to the third party; and
- a step of storing (E20), in a database, an identifier of the third party in association with a reachability address of the instantiated software control gateway or with an identifier of the network slice allocated by the operator to the third party.

6. Management method according to any of Claims 1 to 5, **characterized in that** it is implemented by a software network entity (4) hosted in a data centre (3) called the proximity data centre, which is located in an access network used by the communication device to access the network of the operator, the proximity data centre also hosting the software control gateway (5(3RD)).

7. Management method according to Claim 6, wherein the proximity data centre is located in an access point (6) of the access network.

8. Method for access by a communication device (2) to network connectivity provided by a third party via a network (NW) of an operator, this method comprising the following steps executed by the communication device (2):
- a step (E30) of requesting attachment to the network of the operator comprising providing an identifier of the third party (ID(3RD)), sent to a software network entity (4) instantiated to manage attachment of a communication device to the network (NW);
- a step (E50) of receiving, from the software network entity (4), a message containing contact information of a software control gateway (5(3RD)) instantiated to control access to a network slice allocated by the operator to the third party, this contact information comprising a reachability address of the software control gateway or an identifier of the network slice to which access is controlled by the software control gateway, said message inviting the communication device to attach to the software control gateway;
- a step (E60) of requesting attachment to the software control gateway (5(3RD)) using the contact information; and
- a step (E90) of access by the communication device (2) to network connectivity via the slice of the network of the operator allocated to the third party.

9. Computer program (PROG4, PROG2) comprising instructions for executing the steps of the management method according to any of Claims 1 to 7 or for executing the steps of the access method according to Claim 8 when said program is executed by a computer.

10. Computer-readable storage medium (9, 14) on which a computer program according to Claim 9 is stored.

11. Software network entity (4), instantiated to manage attachment of at least one communication device to a network of an operator in order to benefit from network connectivity provided by a third party via the network of the operator, said virtual network entity comprising:
- a receiving module (4A), capable of receiving from said communication device a request for attachment to the network of the operator and an identifier of the third party;
- an obtaining module (4B), configured to obtain, using the identifier of the third party, contact information of a software control gateway instantiated to control access to a network slice allocated by the operator to the third party, this contact information comprising a reachability address of the software control gateway or an identifier of the network slice allocated by the operator to the third party and access to which is controlled by the software control gateway; and
- a sending module (4C), configured to send a message to the communication device containing the contact information and inviting the communication device to attach to the software control gateway using this contact information.

12. Computer system (3) comprising:
- a software network entity (4) according to Claim 11 instantiated to manage attachment of at least one communication device to the network of the operator in order to benefit from network connectivity provided by the third party via the network of the operator; and
- a software control gateway (5(3RD)) instantiated to control access to a network slice of the operator allocated to the third party.

13. Computer system (3) according to Claim 12, further comprising an access point of an access network to which the communication device is connected and used by the communication device to access the network of the operator.

14. Communication device (2) comprising:
- a first requesting module (2A), configured to request attachment to a network of an operator in order to benefit from network connectivity provided by a third party via the network of the operator, said requesting module being configured to provide an identifier of the third party;
- a receiving module (2B), capable of receiving a message containing contact information of a software control gateway instantiated to control access to a network slice allocated by the operator to the third party, this contact information comprising a reachability address of the software control gateway or an identifier of the network slice to which access is controlled by the software control gateway, said message inviting the device to attach to the software control gateway;
- a second requesting module (2C), configured to request attachment to the software control gateway using the contact information; and
- an accessing module (2E), configured to access the network slice of the operator and provide the communication device with network connectivity via said network slice of the operator allocated to the third party.

15. Communication system (1) comprising:
- a communication device (2) according to Claim 14 having subscribed to network connectivity provided by a third party via a slice of a network of an operator; and
- a computer system (3) according to Claim 12 or 13.

16. Communication system (1) according to Claim 15, wherein the computer system is a data centre.
